(19) Europäisches Patentamt
European Patent Office
Office européen des brevets

(11) **EP 2 141 325 A2**

(12) **EUROPEAN PATENT APPLICATION**

(43) Date of publication:
**06.01.2010 Bulletin 2010/01**

(51) Int Cl.:
***F01D 1/24*** (2006.01)   ***F02C 3/067*** (2006.01)
***F02C 7/36*** (2006.01)   ***F02K 3/072*** (2006.01)

(21) Application number: **09160475.1**

(22) Date of filing: **18.05.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **05.11.2008 US 265591**
**21.05.2008 US 124828**

(71) Applicants:
• **Nercessian, Kevork**
**82229 Seefeld (DE)**

• **Nercessian, Petra**
**82229 Seefeld (DE)**

(72) Inventor: **Nercessian, Kevork**
**82229 Seefeld (DE)**

(74) Representative: **Englaender, Klaus**
**HML**
**Patentanwälte**
**Schraudolphstrasse 3**
**80799 München (DE)**

(54) **Gas turbine engine with counterrotating compressors**

(57)   The invention is directed to a gas turbo engine comprising a compressor, a combustion chamber, and a turbine section installed one after the other in series in the direction of the air and gas flow. The compressor consists of two The deviation of the performance defined as "air mass flow(s)" between both compressor groups is minimized by dividing the blade wheels of the compressor into two groups, wherein the blade wheels of the two compressor groups are made to rotate in opposite directions. Detachment of the air mass flow from the blades of the second compressor groups is avoided by using a bypass. The blade wheels of the second compressor group, beginning at the first blade wheel, are progressively bigger to allow a bypass for the air stream coming from the first compressor group to serve all the blade wheels of the second group simultaneously.

AERO TURBO ENGINE

FIG. 4A

**Description**

**BACKGROUND OF THE INVENTION**

The invention is directed to gas turbo engines which are a particular form of a combustion engine comprising mainly a compressor, a combustion chamber and a turbine installed one after the other in the direction of the air and gas flow. The turbine withdraws from the hot stream of gases coming out of the combustion chamber the energy needed to drive the compressor by means of a shaft. By this operation the pressure of the gas stream is reduced by the amount corresponding to the energy withdrawn from the turbine for the compressor.

The two main applications of gas turbine engines are:

1. A gas turbine engine in which the hot gas stream transmits its total energy to one or more turbine groups. With a part of the energy the turbine serves the compressor. The rest of the energy drives by means of a shaft an external device like

- a generator of electricity
- the propeller of an aircraft or big ships
- the rotor of a helicopter
- a hovercraft
- heavy vehicles or locomotives
- other devices like pumps
  By this application the gas turbine engines are commonly called as gas turbines.
  The designation "gas turbine" will be used in the following for this application of gas turbine engines.

2. A gas turbine engine in which the remaining gases after serving the first group of the turbine, stream out of the engine for the propulsion of an aircraft. In this application the gas turbine engine is commonly culled as jet engine or aero turbo engine.
The designation "Aero Turbo Engine" will be used in the following for this kind of gas turbine engines.

Since the creation of the modern gas turbine engines about 55 years ago, the main principle of the operation remained the same. It goes without saying that several improvements took place on these conventional gas turbine engines. Except for the improvement of a better profile and better material of the blade wheels and a better technology for cooling, none of those improvements however brought a basic modification in the construction of gas turbine engines which could update the actual technology to a new generation of gas turbine engines.

The main principle of the operation remaining unchanged, about 70 % of the produced energy in the combustion chamber is used for the performance of the compressor and only 30% of the total energy is the useful effective energy which unables the aircraft to fly.

The turbines and compressors of gas turbine engines today by the actual technical level have the following disadvantages:

- For the construction of a gas turbine engine with an acceptable output of air mass flow/s from the compressor, the blade wheels of the compressor must have a big size and a great number of blade wheels must be used.

- Conventional compressors have big dimensions and more weight.

- For the construction of a gas turbine engine with an acceptable withdrawal of energy from the hot gases, the turbine blade wheels must have a big size and a great number of turbine blade wheels must be used.

- Conventional turbines have big dimensions and more weight.

- For the numerous blade wheels needed for the turbine and compressor sections, the gas turbine unit of the conventional gas turbine engine is too big and too heavy.

- The actual compressors of modern gas turbine engines with a technology being 55 years old, consume a too big quantity of energy for a targeted output of air mass flow per second (in the following referred to as air mass flow/s). The big quantity of energy consumed from the compressor (2/3 of the total energy) results with a significant amount of more fuel consumption and less effective thrust for the flight.

Since fuel began to belong to combustible resources which are becoming rarer in this world, the fuel prices are getting higher and the fuel consumption is playing a bigger economical role in the choice of gas turbine engines.

The dimensions and especially the weights of conventional gas turbo engines, particularly aero turbo engines, have arrived a limit that does not allow any significant amelioration for a better performance without raising the weight of an engine. An installation of heavier engines brings problems especially for the design and construction of aircraft.

The importance of less weight and less fuel consumption for gas turbine engines have created the necessity to find a solution hallowing the compressor to produce a higher performance of air mass flow/s by consuming less energy which is withdrawn from the turbine for the compressor.

## SUMMARY OF THE INVENTION

It is a primary object of the present invention to provide a gas turbine engine having less weight and less fuel consumption compared to conventional gas turbine engines.

This primary object of the invention is attained by the gas turbine engine as defined by the features of claim 1.

Advantageous developments of the invention are defined by the features of the subclaims.

More particularly, the invention mainly differs from the prior art in that the second of two compressor groups, located downstream of the first compressor group has blade wheels rotating in a second compressor direction opposite to the first compressor direction such that a deviation of the performance defined as air mass flow/s between both compressor groups is minimized and a detachment of the air mass flow from the blades of the first blade wheel of the second compressor group is substantially eliminated.

In order to avoid the air stream arriving from the first compressor group to be torn off from the blade wheels of the second compressor group, the invention provides a bypass, which is provided between the inner wall of the compressor and the blade wheels of the second group of the compressor, starting at the upstream end and ending at the last blade wheel of the second group which enables the air mass flow coming form the first group of the compressor to serve all the blade wheels of the second compressor group simultaneously.

According to the present invention as defined in claim 1, a targeted performance of a gas turbine engine could be realized by 2/3 of the weight of a modern gas turbine engine as outlined in the following in more detail. This characteristic of the weight is highly appreciated by the producers of aero turbo engines and producers of aircrafts.

The total performance of a gas turbine engine is proportional to the air mass flow/s produced by the compressor. The novel concept of the present invention allows the compressor to produce a minimum realistic value of 2.4 times more air mass flow than a conventional compressor by the same amount of energy withdrawn from the turbine with the result of 54% less fuel consumption and 54% less gas emission for a targeted thrust of a gas turbine engine (see comparison no. 11 on page 16).

In the following an explanation for the effects attained by the invention describes the basic modifications and the operational technology of the compressor and Part II describes the cooperative function between the compressor and the rest of the components of the aero turbo engine.

### Actual technical standard

a) The very high rotational speeds of the blade wheels in compressors and pumps create an air mass flow which is almost circular by a very low effective axial pressure. A guide wheel or guide plate must be installed next to every blade wheel to straighten partly the almost circular air mass flow. By this procedure, the air mass flow slows down and the axial pressure of the air mass flow increases to a useful magnitude.

Every combination of a blade wheel followed by a guide wheel or guide plate forms a set. It goes without saying that every time a "blade wheel" is mentioned, it concerns always a blade wheel plus a guide wheel.

The efficiency of a compressor is a function of the axial pressure. The axial pressure of a single blade wheel without a guide wheel is too weak for a reasonable efficiency of a compressor because most of the energy of the air mass flow created by the blade wheel will be consumed for the production of the circular streaming of the air mass flow and not for the creation of an axial flow.

Chart N° 100 shows a vector diagram of two air streams. The vector AC represents the air mass flow of a single blade wheel and the vector AC1 represents the air mass flow of the same blade wheel in combination with a guide wheel.

b) Chart N° 1 shows a vector diagram of two air streams AC and BC2 produced by two identical blade wheels rotating in one and the same direction. The vectors AC and BC2 show the air mass flow after passing through the guide wheels installed each next to the corresponding blade wheel. The sum of these two vectors is AC + BC2 = AC1. From the sum of the total energy transmitted to both blade wheels -vector AC1- only the vector AB1 is effective. The radial vector B1C1 represents the vector producing the twisting movement of the air mass flow which causes the turbulences in the air mass flow without any participation in the effective axial air mass flow. The disadvantages of two blade wheels rotating in one direction by the same rotational speed are:

- loss of energy through an undesirable twisting of the air mass flow
- presence of undesirable turbulences in the air mass flow.
  From the original energy transmitted from the compressor to the air mass flow represented by the vectors AC and BC2 only the axial vectors AB and BB1 are effective and can be Effective.

c) The Chart N° 2 shows the vectors of two equal helicoidal air streams AC and AC1 for two identical blade wheels rotating in opposite directions to each other in accordance with the invention. The vectors AC and AC1 show the air mass flow after they have passed through the guide wheels installed each next to the corresponding blade wheels. The components of the helicoidal vectors are:

$$AC = AB + BC$$

$$AC1 = AB + BC1$$

The radial components BC and BC1 being equal and in opposite directions to each other, eliminate each other by straightening the full length of the helicoidal vectors AC and AC1. By the absence of the radial components, there will be no loss of energy due to undesirable rotational movements in the air mass flow and the resulting air mass flow will be totally axial and free from turbulence.

The concept of two similar blade wheels rotating in opposite directions to each other turns all the disadvantages caused by the helicoidal air flow resulting from the rotational movement of two blade wheels in one direction to the following advantageous results:

- The air mass flow streaming out of the compressor section is totally axial without any turbulences.

- The straightened vectors AC and AC1 are equal each to the axial vector AB2. For two blade wheels rotating in opposite directions to each other, the total effective axial vector is twice the vector AB2 equaling the vector AB3 (instead equaling the vector AB1).

- The vector AB3 is 2.4 times more (+ 140%) than the vector AB1 which would be the sum of the effective axial vectors AB+BB1 of two identical blade wheels rotating in one direction.

d) Different efficiencies are obtained by different angles between the helicoidal air mass flow and the axle of the blade wheels as outlined in the following.

In the Chart N° 3 three helicoidal vectors AA1, AX and AB represent three different main vectors of air mass flow in the compressor. The angles between the helicoidal vectors of the air mass flow and the axial vector are chosen differently. By higher angles, the length of the main helicoidal vector is longer referring to the same effective axial flow. The axial vector AC is the useful effective vector for all three vectors AB, AX and AA1 which represent the energy transmitted from the compressor to the air mass flow.

The Chart N° 3 shows that by higher angles of the helicoidal vectors, the energy given to the air mass flow for a certain effective or useful axial flow is higher than the energy given to the air mass flow by a lower angle of the helicoidal vector. This phenomenon proves that the concept of the present invention is even more effective by higher angles of the helicoidal vectors because the full length of the helicoidal vector which is longer by higher angles will be straightened to a useful and effective axial vector.

With the help of the concept of the present invention, all three vectors can be straightened in their full lengths. A straightened vector AA1 will turn to an axial vector AC1 with a length of 2.0 times the original axial vector AC, a straightened vector AX will turn to an axial vector AY which is 2.4 times the original axial vector AC and a straightened vector AB will turn to an axial vector AC2 which is 2.75 times the original axial vector AC.

Chart N° 3 shows that higher angles between the helicoidal vector of an air mass flow and the axle of the compressor realize higher performances of the compressor by two blade wheels rotating in opposite directions to each other.

On the other hand, very high angles realize uninteresting and not acceptable performances referring to the operational pressures. The designer of a gas turbine engine will have to plan the most efficient operating angle between the main vector of the helicoidal air mass flow and the axle of the compressor for the final construction of a gas turbine engine.

**Tendency of detachment of the air mass flow**

In the last 35 years, a number of patents concerning compressors of aero turbo engines with two groups of blade wheels rotating in opposite directions to each other were applied for. In the practice, the concept of the construction of all these applications failed to give satisfaction. What is still valid for only two blade wheels rotating in opposite directions to each other is not valid and applicable for two groups of several blade wheels rotating in opposite directions to each other.
By a compressor comprising two groups of four identical blade wheels each, all the blade wheels of both groups being identical, the air mass flow and the pressure produced by the first group is four times higher than the air mass flow and the pressure produced by only one blade wheel. The total air mass flow of the first group of the compressor leaves the first group of the compressor to encounter the second group of the compressor by its first blade wheel rotating in an opposite direction.
The first blade wheel of the second group of the compressor produces a helicoidal air mass flow and a pressure of only one blade wheel in an opposite direction. It does not have enough energy to face and withstand a helicoidal air mass flow which is four times stronger, nor to eliminate a part of the radial component. The air mass flow coming from the first group of the compressor overruns the air mass flow of the first blade wheel of the second group by detaching the air mass from its blades.
Chart N° 4 shows the vector AA4 which is the sum of the four vectors of the four blade wheels of the first group of the compressor. The radial component of the vector AA4 is the vector EA4.
The vector of the air mass flow of the first blade wheel of the second group of the compressor is represented by the vector EE1. The radial component of the vector EE1 is the vector EEO.
The radial vector EA4 being four times stronger and in an opposite direction to the vector EEO overruns the radial vector EEO by detaching the air mass flow of the vector EE1 from the blades of the first blade wheel in the second group of the compressor.

**Summary of the technique used by the invention**

Having given the above explanation the novel technique used by the invention may be summarized as follows:

a) Applying the theory of two similar blade wheels rotating in opposite directions to each other for two groups of blade wheels in the compressor section.

b) Designing approximately equal performances for both groups of the blade wheels of the compressor, and calculating the sum of the performances of all the blade wheels in each group.

$$\text{Air mass flow} = (\text{diameter of the blade wheels})^3$$

Small deviations between both groups of the compressor can be compensated through adjustments of the angles of the blades of the blade wheels.

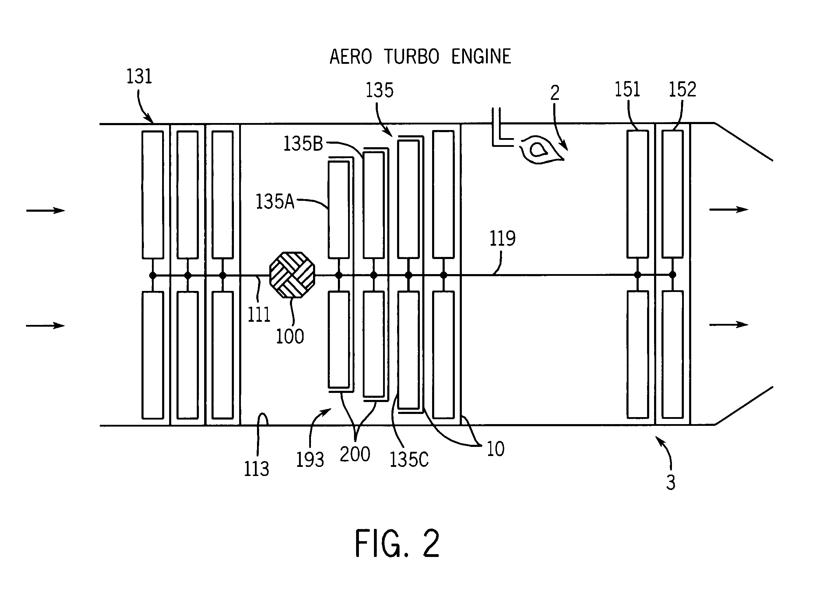

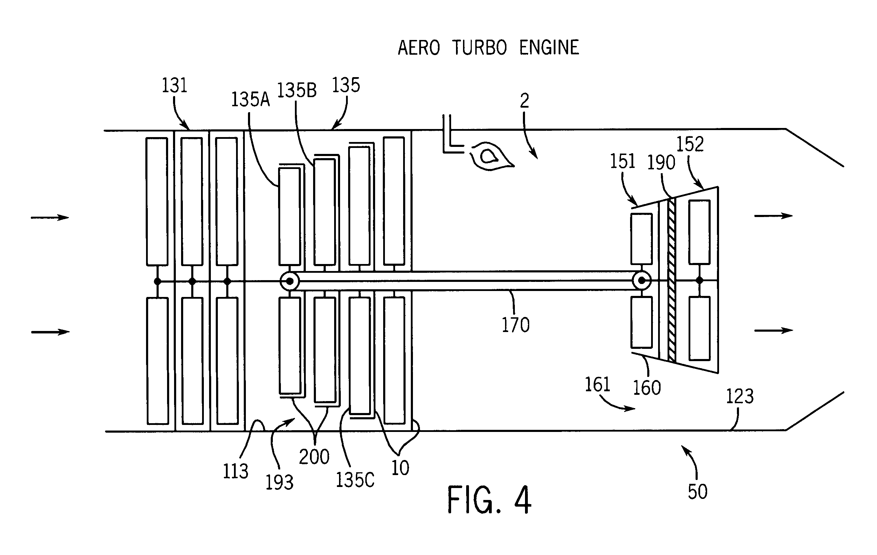

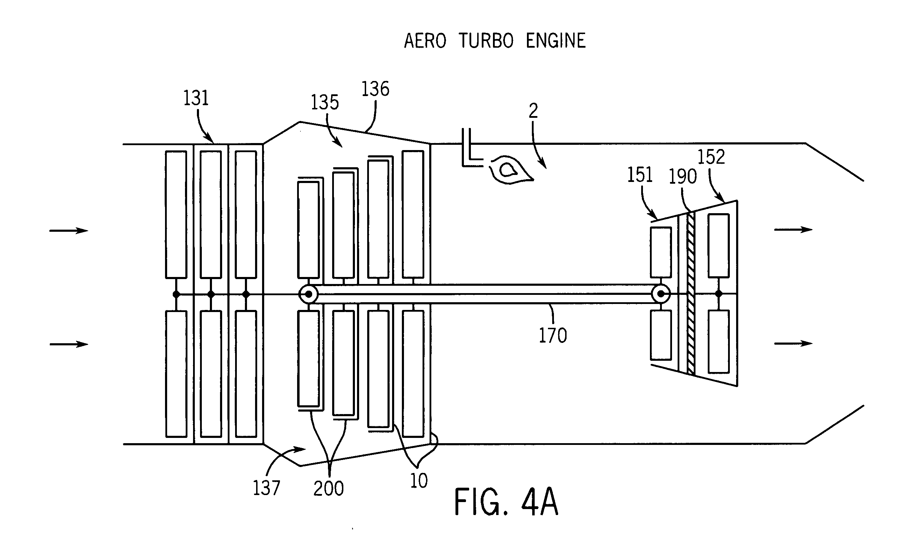

c) Eliminating the problem of the detachment by allowing the first group of the compressor serve all the blade wheels of the second group of the compressor simultaneously.
For this purpose, the first blade wheel of the second group of the compressor has a smaller diameter and the next two blade wheels have progressively increased diameter (Figures 2/3/4). The progressively increased diameters create a bypass between the blade wheels and the inner wall of the compressor which allows the air mass flow coming from the first group of the compressor serve all the blade wheels of the second groups of the compressor simultaneously.
The bypass could be more effective if the body of the compressor is slightly conical at the height of the second group of the compressor 135 as shown in figure 4a. A decision of the necessity of using smaller blade wheels in the beginning of the second group of the compressor by progressively increased diameter depends from the designed total number of blade wheels.

The Chart N° 5 shows the sum of four vectors of the first group of the compressor AA4 with its radial component EA4. The sum of the radial vectors of the five blade wheels of the second group of the compressor (below the axial line AA'4) is EE5. The radial vectors EA4 and EE5 being equal and in opposite direction to each other eliminate each other.

**Operational description**

The quantity of the air mass flow streaming through the bypass to each of the different blade wheels of the second compressor group (see Figures 2/3/4) will be regulated automatically through the performances calculated for each of the blade wheels. By the same rotational speed, every blade wheel has a certain capacity to compress a certain amount of air mass flow. It cannot compress more and if there is not enough air mass to compress it creates a vacuum in front of the blade wheel. The vacuum will attract and sallow the air mass which is present next to it.

The property of the blade wheels to be able to compress only a certain calculated air mass flow but create a vacuum when a certain air mass flow is not present to be compressed, gives the possibility to all the blade wheels of the second compressor group to serve themselves with the air mass flow coming from the first compressor group simultaneously.

In this manner, the radial component of the helicoidal air mass flow produced in the first compressor group will be completely eliminated through the partial radial components of the blade wheels of the second compressor group (see chart N° 5). The target of the present invention is achieved thereby.

**A new generation of aero engines and gas turbines**

The fact that two identical blade wheels rotating in opposite directions to each other produce a significant amount of more air mass flow than two blade wheels rotating in the same direction belongs to an actual technical standard. This feature of two blade wheels rotating in opposite directions to each other could not be applied until now for technical reasons to two groups of blade wheels rotating in opposite directions to each other.

A new concept of technology has been developed which allows two groups of blade wheels to rotate in opposite directions to each other by producing an average of 2.4 times more air mass flow than a conventional compressor by the same number of blade wheels rotating in one direction.

The creation of 2.4 times more air mass flow by the same number of blade wheels is realized by the same withdrawal of energy from the turbine. This characteristic of the new concept allows a compressor to consume 2.4 times less energy than a conventional compressor for a determined targeted performance of air mass flow.

**Increase of the efficiency**

Assuming that a withdrawal of energy from the turbine for a conventional compressor is:

$$2/3 = 67\%$$

of the total energy produced in the combustion chamber. The effective thrust will be:

$$100 - 67 = 33\%$$

The withdrawal of energy from the turbine for a compressor according to the new concept is:

$$2/3 \cdot 1/2.4 = 1/3.6 = 28\%$$

of the total energy produced in the combustion chamber.

The remaining effective thrust will be:

$$100 - 28 = 72\%$$

The increase of the efficiency of an aero engine according to the new concept is:

$$(72 - 33) \times 100/72 = 54\,\%$$

**Reduction of fuel consumption**

A reduction of fuel consumption of an aero engine according to the new concept is proportional to the increase of its efficiency compared to the efficiency of a conventional aero engine and is independent from the number of blade wheels or effective thrust of an aero engine. Depending on the increase of the efficiency of an aero engine according to the new concept and to the "Comparison of technical data N° 11 and N° 12", the reduction of fuel consumption of an engine according to the new concept is **54 %.**

For an equal effective thrust of 300 KN, the "Comparison of technical data N° 11" shows that

• a conventional aero engine a) consumes 900 units of fuel, the number 900 being the total air mass flow entering the combustion chamber and being directly proportional to the fuel consumption,
•an aero engine b) according to the new concept consumes 415 units of fuel,
• the reduction of fuel consumption between engines a) and b) is:

$$(900 - 415) \times 100/900 = 54\,\%.$$

The "Comparison of technical data 12" shows by pos. a) the technical data of the same conventional engine as described under pos. a) of the "Comparison of technical data 11". It shows further under pos. b) an aero engine using only half the blade wheels of the compressor of the engine a).

The "Comparison of technical data 12" shows further that

• even by using half the number of blade wheels in the compressor an effective thrust is 780/300=2.6 times more,
• no matter how many blade wheels of the compressor are used and no matter how much effective thrust is produced, aero engines according to the new concept have the same fuel consumption per 100 KN which results with a reduction of fuel consumption of 54 % compared to the fuel consumption of conventional aero engines.

A reduction of fuel consumption of 54 % realizes a significant low cost for the airlines by additionally 54 % less emission of undesirable gases in the atmosphere with the result of a slow down of the warming of the world climate.

54 % less fuel consumption allows 54 % less fuel to carry by every flight which gives the possibility for an aircraft to increase the loading capacity for more passengers and freight. An aero engine according to the new concept gives an aircraft flying from Frankfurt/Germany to Los Angeles/USA the possibility to carry an average of 75.000 liters less fuel in the tanks.

**Reduction of weight of an aero engine**

The explanations of the charts 2 and 5 demonstrate that a compressor according to the new concept produces an average of 2.4 times more air mass flow than a conventional compressor. Accordingly a compressor of an aero turbo engine according to the new concept needs only ½.4 = 42% of the number of blade wheels of a conventional compressor and logically of a conventional turbine for an equal performance.

By taking the example of an aero engine having 14 blade wheels in the compressor section, an equal performance of the compressor could be realized by approximately 14x42/100 = 6 blade wheels with a compressor according to the new concept.

The fact of using only 42% of the number of blade wheels in an aero turbo engine according to the new concept results with an approximate 1/3 less weight of the aero engine.

**Comparison of technical data N° 11**

a) Data of a conventional aero turbo engines by a withdrawal of 2/3 of the energy from the turbine for the compressor:

| | |
|---|---|
| Total thrust leaving the combustion chamber: | 900 KN |
| Energy withdrawal from the turbine for the compressor: | 600 KN |
| Effective thrust; | 300 KN |
| Approximate fuel consumption per 100 KN:900x100/300: | 300 units |

b) Data of an aero turbo engine according to the present invention with an effective thrust of 300 KN by a withdrawal of 1/3.6 of the total energy from the turbine for the compressor:

| | |
|---|---|
| Total thrust leaving the combustion chamber: | 415 KN |
| Energy withdrawal from the turbine for the compressor: | 115 KN |
| Effective thrust: | 300 KN |
| Approximate fuel consumption per 100 KN: 415x100/300: | 138 units |

c) **Reduction of fuel consumption between engines a) and c):**

$$(300 - 138) \times 100/300: \qquad\qquad 54\ \%$$

d) Method of calculation of the total thrust produced in the combustion chamber for an effective thrust of 300 KN of an aero engine according to the new concept:

$$X = \text{total thrust}$$

$$X - 2/3 \cdot \tfrac{1}{2}.4\ \ X = 300$$

$$X - 1/3.6\ X = 300$$

$$2.6/3.6\ X = 300$$

$$X = 300 \times 3.6/2.6 = 415\ KN$$

**Comparison of technical data N° 12**

a) Data of conventional aero turbo engines by a withdrawal of 2/3 of the energy from the turbine for the compressor:

| | |
|---|---|
| Total thrust leaving the combustion chamber: | 900 KN |
| Energy withdrawal from the turbine for the compressor: | 600 KN |
| Effective thrust; | 300 KN |
| Approximate fuel consumption per 100 KN:900x100/300: | 300 units |

b) Data of an aero engine according to the present invention by half the number of blade wheels of the compressor of the engine a)

| | |
|---|---|
| Total thrust leaving the combustion chamber: | 1080KN |
| Energy withdrawal from the turbine for the compressor: | 300 KN |
| Effective thrust: | 780 KN |
| Approximate fuel consumption per 100 KN: 1080x100/780: | 138 units |

c) <u>**Reduction of fuel consumption between engines a) and b):**</u>

<u>**(300 - 138) x 100/300:**</u>                                             <u>**54 %**</u>

**Advantages resulting from the new concept**

- A compressor according to the new concept produces an average of 2.4 times more air mass flow than a conventional compressor by the same number of blade wheel.

- According to the new concept, ½.4 = 42% of the number of blade wheels of a conventional compressor is needed for an equal performance of air mass flow.

- An aero engine according to the new concept has approximately 1/3 of less weight than a conventional aero engine.

- A targeted thrust could be realized by 54 % less fuel consumption.

- 54 % less fuel consumption results with a lower cost of fuel per passenger and loading unit.

- 54 % less fuel consumption allows 54 % less fuel to carry by every flight which gives the possibility to increase the loading capacity for more passengers and freight. According to the new concept, a long distance aircraft flying from Frankfurt to Los Angeles would carry 70.000 to 90.00 liters less fuel in the tanks.

- The possibility to have a significant amount of more thrust by the same weight of an aero turbo engine, or have 1/3 less weight of the engine for a targeted thrust or have 54 % less fuel to carry resulting from a lower fuel consumption, give a designer the opportunity to develop a new aircraft which could satisfy all the aircraft users demanding a significant improvement of the aircraft relating to the performance and to the economy.

- The total fuel consumption of all the aircrafts in this world is enormous. By saving an average of 54 % of the fuel consumption due to more economic aero turbo engines, the limited oil resources in this world will be for a significant period of time longer available than predicted.

- 54 % less fuel consumption realizes 54 % less emission of undesirable gases in the atmosphere resulting with a slow down of the warming of the world climate.

- A new design of an aero turbo engine according to the new concept can be developed by using most of the components of a conventional aero turbo engine, thus reducing the developing costs of a new design.

- According to the present invention, an air mass flow streaming into the combustion chamber without any turbulence realizes a better ignition and a homogeneous burning of the fuel with the result of less fuel consumption.

- The compressor produces a higher performance that overcomes more easily the static pressure, which in other words is the inner resistance of the gas turbine engine.

- Contrary to an engine according to the present invention, a rotation of all the blade wheels in one direction by a conventional engine causes a one-sided stress to all the moving components of the engine.

- According to the present invention, a steeper angle between the helicoidal air mass flow and the axle of the compressor allows even higher performances of the compressor.

- With the help of a new designed bypass, the first compressor group serves all the blade wheels of the second compressor group simultaneously to eliminate the tendency of detachment of the air mass from the blades of the first blade wheel of the second compressor, group.

The gas turbine of the invention may be provided with a shaft for driving an external rotating device. The shaft is driving a pump, the rotor of a helicopter, the propeller of a turboprop aircraft, a water vehicle, the propeller of a hovercraft, an earth bound heavy vehicle, a tank, a locomotive, a pump for fuel or gas pipelines, or a generator for electricity production. Alternatively, an aero turbo engine comprises the gas turbine engine of the invention adapted to an aero turbo engine so that the hot gases stream out of the engine for propulsion of an aircraft.

In the following the invention will be further described along the drawings showing embodiments of the invention as well as prior art embodiments.

**Brief description of the drawings**

Figure 1      shows a conventional gas turbine engine comprising a compressor 1, a combustion chamber 2, a turbine 3, two shafts 4 and 5 and a guide wheel 10 installed next to every blade wheel.

Figure 1a      shows a second application of a conventional gas turbine engine comprising a compressor 1, a combustion chamber 2, a turbine 3, an outlet 4 for the hot stream of gases and a guide wheel 10 next to every blade wheel.

Figure 2      shows a first embodiment according to the present invention that shows an aero turbo engine comprising two groups of a compressor 131 and 135 rotating in opposite directions to each other with the help of a reverse mechanism 100 installed between both groups of the compressor 131 and 135, a combustion chamber 2 and a conventional turbine with two blade wheels 151 and 152. A guide wheel 10 is installed next to every blade wheel.
Three steel tubes 200 cover the three shorter blade wheels in the second group of the compressor.

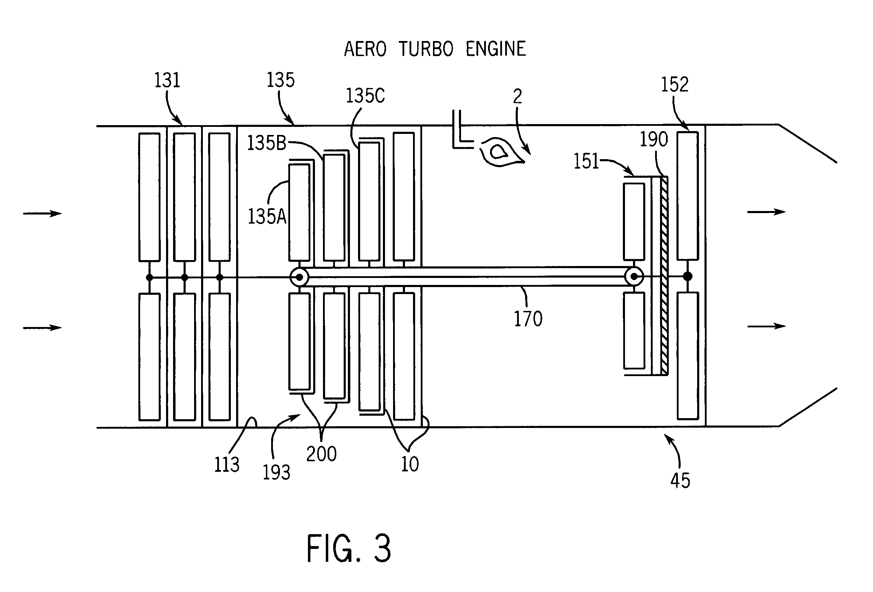

Figure 3      shows a second embodiment according to the present invention that shows an aero turbo engine with two groups of a compressor 131 and 135, a combustion chamber 2, a turbine section comprising a first blade wheel of the turbine 151 with shorter blades, an axial converter 190 and a second blade wheel of the turbine 152. The first blade wheel of the turbine 151 together with the axial converter is covered with a steel tube. Both blade wheels of the turbine 151 and 152 are connected to both groups of the compressor 131 and 135 by means of two concentric shafts 170. A guide wheel 10 is installed next to every blade wheel. Three steel tubes 200 cover the shorter blade wheels in the second group of the compressor.

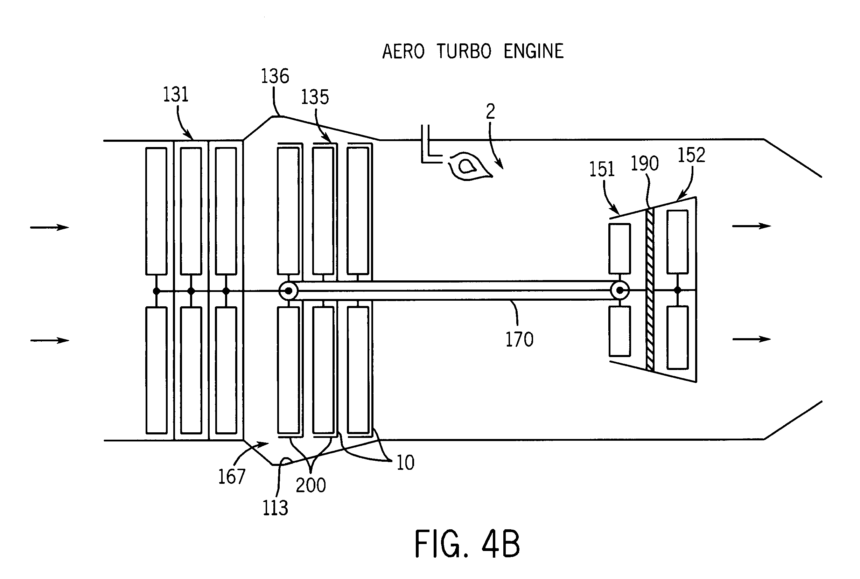

Figure 4      shows a third embodiment according to the present invention that shows an aero turbo engine with two groups of a compressor 131 and 135, a combustion chamber 2, a turbine comprising a first blade wheel 151 with shorter blades, an axial converter 190 and a second blade wheels 152 with slightly longer blades than the blades of the blade wheel 151. All the components of the turbine comprising a first blade wheel 151, an axial converter 190 and a second blade wheel 152 are covered with a steel conical tube. Both blade wheels of the turbine 151 and 152 are connected to both groups of the compressor 131 and 135 by means of two concentric shafts 170. A guide wheel 10 is installed next to every blade wheel. Three rings 200 cover the shorter blade wheels in the second group of the compressor.

Figure 4a      shows a new designed body of the compressor by which the wall of the compressor is conical at the height of the second group of the compressor 135, all blade wheels of this group having different diameters.

Figure 4b      shows a new designed body of the compressor by which the wall of the compressor is conical at the height of the second group of the compressor 135, all blade wheels of this group having the same diameter.

Figure 5a/5b    show a new designed axial converter to be installed between both groups of a turbine to straighten the helicoidal air mass flow coming out of the first group of the turbine.

Figure 6    shows two concentric shafts which connect both groups of the turbine to both groups of the compressor.

Charts N° 100, 1, 2, 3, 4 and 5 show the sectorial components of the air mass flow in the compressor section of a gas turbine engine.

**Detailed description of the preferred example embodiments**

In the accompanying drawings, preferred embodiments of the present invention are described in detail. The drawings are not to be understood as limiting the present invention to only the illustrated and described examples as to how the invention can be used and presenter. Further features and advantages will become apparent from the following and particular description of the invention, which is illustrated in the accompanying drawings wherein elements and structures are designed by the same numerals.
For the realization of the new concept, it's necessary that two groups of blade wheels in the compressor be driven in opposite directions to each other by approximately an equal performance of air mass flow.
Every major producer of aero turbo engines has its own methods of inverting a rotational movement. By the description of the drawings, some methods of inversion of the rotational movement of the turbine and of the compressor are proposed. It goes without saying, that every producer of aero turbo engines is free to use any method of inversion of his preference.
In all the drawings, the numbers of blade wheels are chosen by mere coincidence. Any other number of blade wheels could be used from the designer as long as both groups of the compressor rotate in opposite directions to each other by approximately an equal performance of air mass flow.

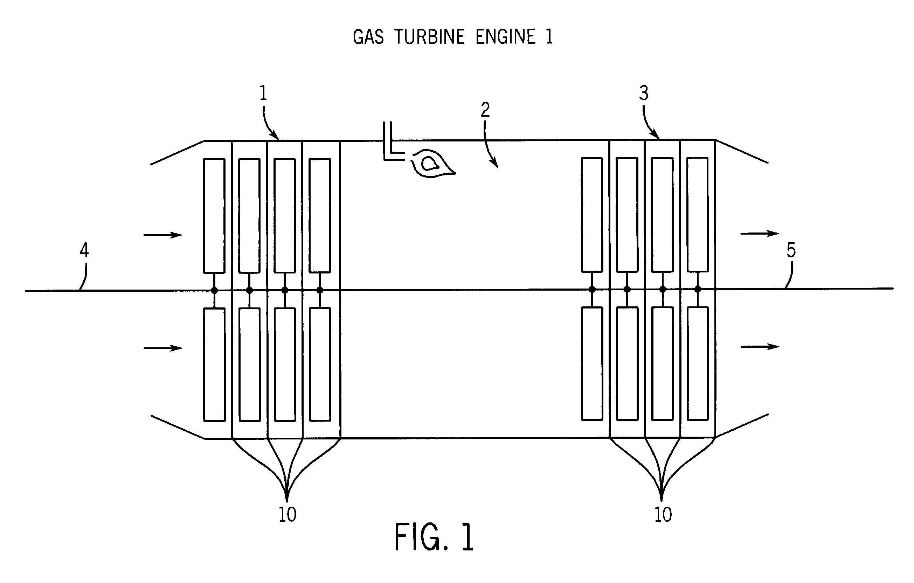

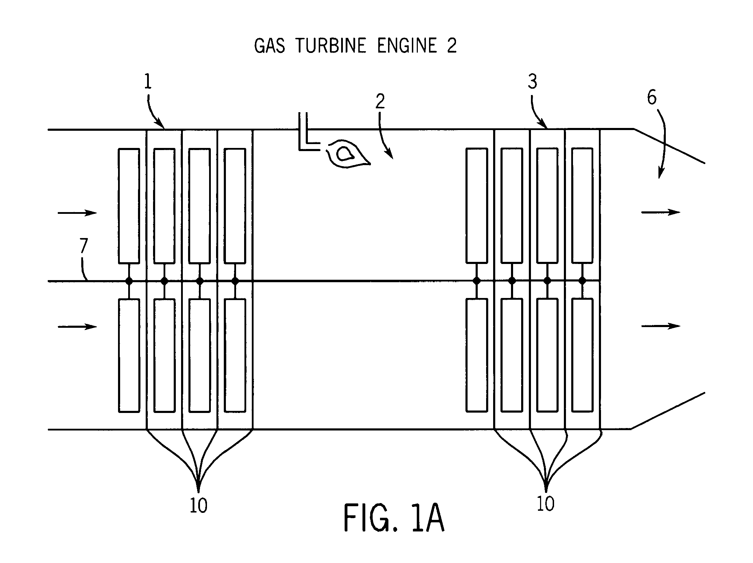

Figure 1 shows the principle of a conventional gas turbine which consists mainly of a compressor 1, a combustion chamber 2, a turbine 3 and a shaft 4 or 5. The turbine withdraws all the energy from the hot gases streaming out of the combustion chamber 2. A part of this energy serves to drive the compressor. The rest of the energy will be transmitted to an external device by means of the shaft 4 or 5. A guide wheel is installed next to every blade wheel to eliminate an almost circular air and gas streaming.
Figure 1a shows another application of a conventional gas turbine engine which is an aero turbo engine comprising mainly a compressor 1, a combustion chamber 2, a turbine 3 and an outlet 4. The turbine 3 withdraws from the hot gases streaming out of the combustion chamber 2 the energy required to drive the compressor 1 by means of a shaft. The rest of the hot gases streams out of the outlet 4 for the propulsion of an aircraft. A guide wheel is installed next to every blade wheel to eliminate an almost circular air and gas streaming.
Figure 2 shows a first embodiment according to the present invention that allows both groups of the compressor to rotate in opposite directions to each other with the help of a reverse mechanism 100. A shaft connects the turbine to the second group of the compressor 135 and to the reverse mechanism 100. A second shaft connects the other side of the reverse mechanism to the first group of the compressor 131. The turbine withdraws from the hot gases streaming out of the combustion chamber 2 the energy required so that both groups of the compressor rotate in opposite directions to each other by approximately an equal performance.
The performance of each group of the compressor can be calculated roughly by adding the partial performances of each of the blade wheels in each group. The partial performance of a blade wheel can be calculated with the hollowing formula:

$$\text{Air mass flow} = (\text{diameter of the blade wheel})^3$$

The influence of the pressure is not considered in the calculations of the following example.
**Example:** In Figure 2 three blade wheels of the first group of compressor 131 have each a diameter of 7.5 units. The performance of the first group of the compressor is: $3 \times 7{,}5^3 = 1.266$ units.
The performance of the second group of the compressor is roughly:

$$1 \times 6.0^3 = 216$$

$$1 \times 6.6^3 = 287$$

$$1 \times 7.0^3 = 343$$

$$1 \times 7.5^3 = 422$$

Total performance: 1.268 units

The difference of performances between the first group and the second group of the compressor could be compensated through adjustments of the angles of the blades of all the blade wheels in the compressor section.

The first blade wheel of the second group of the compressor is designed by a smaller size and the next two blade wheels by progressively increased diameters, thus creating a bypass between the blade wheels of the second group of the compressor 135 and the inner wall of the compressor, This bypass allows the air mass flow coming from the first group of the compressor 131 to serve all the blade wheels of the second group of the compressor 135 simultaneously thus eliminating the possibility of a detachment of the air mass flow from the blades of the first blade wheel of the second group of the compressor.

Three steel tubes 200 cover the shorter designed blade wheels of the second group of the compressor to allow higher performances and a better distribution of the air mass among the blade wheels of the second group of the compressor. A guide wheel 10 is installed next to every blade wheel to eliminate an almost circular air and gas streaming.

Figure 3 shows a second embodiment according to the present invention that allows both groups of the compressor to rotate in opposite directions to each other with the help of two concentric shafts 170.

The turbine section consists of a first blade wheel of the turbine 151 with shorter blade wheels because of the fact that the first blade wheel of the turbine withdraws only 14% from the hot gases streaming out of the combustion chamber, an axial converter 190 and a second blade wheel of the turbine 152 installed one after the other in the direction of the gas flow. The gas flow streaming out of the combustion chamber 2 makes the first blade wheel of the turbine 151 rotate in one direction. A helicoidal gas flow streams out of the first blade wheel of the turbine 151 into an axial converter 190 which straightens the helicoidal gas flow coming out of the first blade wheel of the turbine 151. Only an axial flow of a gas can make the second blade wheel of the turbine 152 rotate in an opposite direction to the first blade wheel of the turbine 151.

The two concentric shafts 170 connect the first blade wheel of the turbine 151 to the second group of the compressor 135 and the second blade wheel of the turbine 152 to the first group of the compressor 135. Both blade wheels of the turbine withdraw from the hot stream of gases the energy required for both groups of the compressor to rotate in opposite directions to each other by approximately an equal performance of air mass flow.

The performance of each group of the compressor can be calculated roughly by adding the partial performances of the blade wheels in each group. The partial performance of the blade wheels can be calculated with the following formula:

$$\text{Air mass flow} = (\text{diameter of the blade wheel})^3$$

The influence of the pressure is not considered in the calculations of the following example.

**Example:** in Figure 3 the first group of the compressor 1 comprises three blade wheels having each a diameter of 7.5 units.

The performance of the first group of the compressor is:

$$3 \times 7.5^3 = 1.266 \text{ units}$$

The performance of the second group of the compressor 135 is:

$$1 \times 6.0^3 = 216$$

$$1 \times 6.6^3 = 287$$

$$1 \times 7.0^3 = 343$$

$$1 \times 7.5^3 = 422$$

Total performance: 1.268 units

The difference of performances between the first group 1 and the second group 2 of the compressor is:

$$1.268 - 1.266 = 2 \text{ units}$$

These 2 units will be compensated through an adjustment of the angles of the blade of all the blade wheels in the compressor section.

The first blade wheel of the second group of the compressor 135 is designed by a smaller size and the next two blade wheels are designed by progressively increased diameters, thus creating a bypass between the blade wheels of the second group of the compressor 135 and the inner wall of the compressor. This bypass allows the air mass flow coming from the first group of the compressor 131 to serve all the blade wheels of the second group of the compressor 135 simultaneously thus eliminating the possibility of a detachment of the air mass flow from the blades of the first blade wheel of the second group of the compressor 135.

Three steel tubes 200 cover the shorter designed blade wheels of the second group of the compressor 135 to allow higher performance and a better distribution of the air mass flow among the blade wheels of the second group of the compressor 135. A guide wheel 10 is installed next to every blade wheel to eliminate an almost circular air or gas streaming behind each blade wheel.

Figure 4 shows a third embodiment according to the present invention that allows both groups of the compressor to rotate in opposite directions to each other by means of two concentric shafts.

The turbine section comprises a first blade wheel of the turbine 151, an axial converter 190 and a second blade wheel of the turbine 152 installed one after the other in the direction of the gas flow.

The blades of the first blade wheel of the turbine 151 are shortened because of the fact that the first bade wheel of the turbine withdraws only 14% from the hot gases streaming out of the combustion chamber. For the same reason, the blades of the second blade wheel of the turbine 152 are shortened-. They withdraw the same quantity of 14% from the hot gases. The blades of the second blade wheel 152 of the turbine are slightly longer than the blades of the first blade wheel of the turbine 151, because they are served with a weaker gas flow than the first blade wheel 151. The gas flow gets slightly weaker by passing through the axial converter.

The axial converter straightens the helicoidal gas flow coming from the first blade of the turbine, then only an axial flow can make the second blade wheel of the turbine rotate in an opposite direction to the first blade wheel of the turbine 151.

All the components of the turbine, namely the first blade wheel 151, the axial converter 190 and the second blade wheel of the turbine are covered by a conical steel tube which allows a bypass for the 72% of the gas flow between the conical steel tube and the inner wall of the turbine.

The two concentric shafts 170 connect the first blade wheel of the turbine 151 to the second group of the compressor 135 and the second blade wheel of the turbine 152 to the first group of the compressor 131. Both blade wheels of the turbine withdraw from the hot stream of gases the energy required so that both groups of the compressor rotate in opposite directions to each other by approximately an equal performance of air mass flow.

The performance of each group of the compressor can be calculated roughly by adding the partial performances of the blade wheels in each group. The partial performance of a blade wheel can be calculated with the following formula:

$$\text{Air mass flow} = (\text{diameter of the blade wheel})^3$$

The influence of the pressure is not considered in the calculations of the following example.

**Example:** in Figure 4 the first group of the compressor 131 comprises three blade wheels having each a diameter of 7.5 units. The performance of the first group of the compressor is:

$$3 \times 7.5^3 = 1.266 \text{ units}$$

The performance of the second group of the compressor 135 is:

$$1 \times 6.0^3 = 216$$

$$1 \times 6.6^3 = 287$$

$$1 \times 7.0^3 = 343$$

$$1 \times 7.5^3 = 422$$

Total performance: 1.268 units

The difference of performances between the first group 131 and the second group 135 of the compressor is:

$$1.268 - 1.66 = 2 \text{ units}$$

These 2 units will be compensated through adjustments of the angles of the blades of all the blade wheels in the compressor.

The first blade wheel of the second group of the compressor 135 is designed by a smaller size and the next two blade wheels are designed by progressively increased diameters, thus creating a bypass between the blade wheels of the second group of the compressor 135 and the inner wall of the compressor. This bypass allows the air mass flow coming from the first group of the compressor 131 to serve all the blade wheels of the second group of the compressor 135 simultaneously thus eliminating the possibility of a detachment of the air mass flow from the blades of the first wheel blade of the second group of the compressor 135.

Three steel tubes 200 cover the shorter designed blade wheels of the second group of the compressor 135 to allow higher performance and a better distribution of the air mass flow among the blade wheels of the second group of the compressor 135. A guide wheel 10 is installed next to every blade wheel to eliminate an almost circular air or gas streaming behind each blade wheel.

Figure 4a shows a new designed body of the compressor by which the wall of the compressor at the height of the second group of the compressor 135 is conical. The conical part of the body of the compressor is for creating an effective bypass when the blade wheels of the second group of the compressor 135 have progressively increased diameter, wherein these blade wheel contribute to the bypass because of their increasing diameter.

Figure 4b shows the same body of the compressor as Figure 4a having a conical part. In contrast to Figure 4a all blade wheels of the second group of the compressor have equal diameters. Also this embodiment provides for an effective bypass between the body and the blade wheels mainly due to the conical shape of the body of the compressor, the blade wheels themselves not contributing to the bypass because of their equal diameters.

The same conical part of the body of the compressor shows another method of creating a bypass between the inner wall and the blade wheels of the second group of the compressor in the case that all the blade wheels have equal diameters.

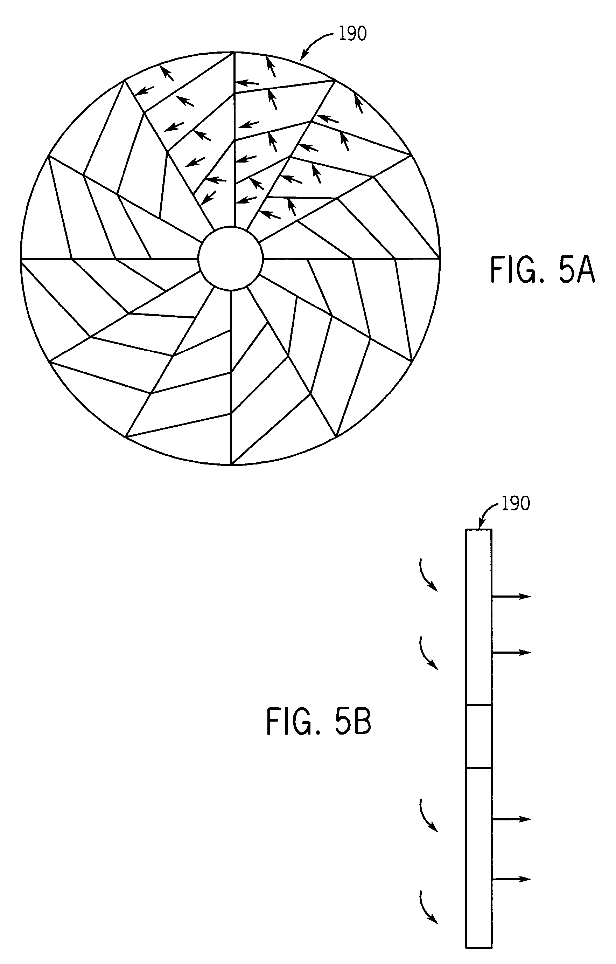

Figures 5a/5b show a new designed axial converter to be used for the second embodiment (Figure 3) and the third embodiment (Figure 4) of the present invention. The width of the axial converter must be adapted to the characteristics of the gas stream like pressure and velocity which is to be straightened. It goes without saying that a gas stream having more pressure and more velocity needs more width to get fully straightened.

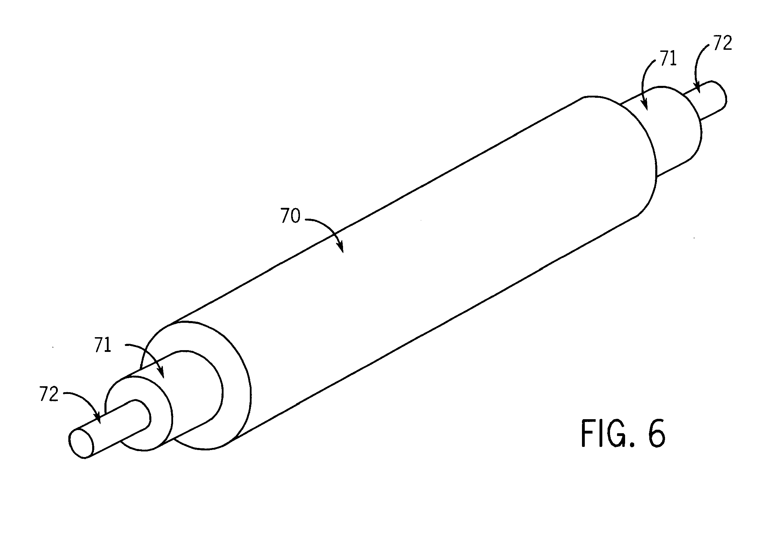

Figure 6 shows two concentric shafts 72 and 71 with their protective covering 70. Bearings installed between the shafts 72, 71 and their cover 70 secure the rotation of the shafts 72 and 71 in one or the other direction.

## STATEMENT

While the invention has been described with the respect to the physical embodiments constructed in accordance therewith, it will be apparent to those skilled in the art that various modification, variations, and improvements of the present invention may be made in the light of the above teachings and with the purview of the appended claims without departing from the intended scope of the invention. In addition, those areas in which it is believed that those ordinary skilled in the art are familiar, they have not been described herewith in order not to unnecessarily obscure the invention described herein. Accordingly, it is to be understood that the invention is not to be limited by the specific illustrative embodiments, but only by the scope of the dependent claims.

## Claims

1. A gas turbine engine comprising:

    a compressor,
    a combustion chamber and,
    a turbine installed one after the other in the direction of the air mass flow

    wherein the compressor comprises:

    a first compressor group having blade wheels rotating in a first compressor direction and
    a second compressor group having blade wheels installed downstream of the first compressor group rotating in a second compressor direction opposite to the first compressor direction such that a deviation of the performance defined as air mass flow/s between both compressor groups is minimized and a detachment of the air mass flow from the blades of the first blade wheel of the second compressor group is substantially eliminated, and

    wherein a bypass is created between the inner wall of the compressor and the blade wheels of the second group of the compressor, starting at the upstream and ending at the last blade wheel of the second group which enables the air mass flow coming form the first group of the compressor to serve all the blade wheels of the second compressor group simultaneously.

2. A gas turbine engine of claim 1, wherein the bypass is conical with the biggest cross-section at the upstream end of the second group of the compressor.

3. A gas turbine engine of claim 2, wherein the bypass comprises a conical widening of the compressor wall.

4. A gas turbine engine of claim 2 or 3, wherein the blade wheels of the second compressor group begin by a first smaller blade wheel and get progressively bigger in size.

5. A gas turbine engine of claim 2 or 3, wherein the blade wheels of the second compressor group have all the same size of diameter.

6. A gas turbine engine of one of claims 1 to 5, wherein
    two groups of compressor blade wheels rotate in opposite directions to each other by approximately the same performance of air mass flow and the air mass flow coming from the first compressor group serves all the blade wheels of the second compressor group simultaneously.

7. The gas turbine engine of claim 4, wherein

the first compressor group comprises several blade wheels having all the same size of diameter and the second compressor group comprises:

a first blade wheel having a diameter of 80% of the diameter of the blade wheels of the first compressor group,
a second blade wheel having a diameter of 88% of the diameter of the blade wheels of the first compressor group,
a third blade wheel having a diameter of 93% of the diameter of the blade wheels of the first compressor group,
a fourth blade wheel having a diameter of 100% of the diameter of the blade wheels of the first compressor group.

8. The gas turbine engine of claim 4, wherein
the second compressor group comprises one blade wheel more than the first group of the compressor, the blade wheels having different sizes, starting with the smallest size of a diameter and continuing with progressively bigger sizes of the diameter, and except for the last blade wheel of the second compressor group, all the other blade wheels are covered by steel rings which allow higher performance of the blade wheels and a better distribution of the air mass flow between all the blade wheels of the second compressor group.

9. The gas turbine engine of claim 5, wherein
both groups of the compressor have the same number of blade wheels and except for the last blade wheel, all the blade wheels of the second compressor group are covered by steel rings which allow higher performance of the blade wheels and a better distribution of the air mass flow between all the blade wheels of the second compressor group.

10. The gas turbine engine of one of claims 1 to 9, wherein
the angles of the blade wheels of both compressor groups are adjustable for an operation of the compressor by technically the highest possible angle between the helicoidal air mass flow and the axle of the compressor for obtaining the highest possible performance of the compressor by the process of straightening the helicoidal air mass flow to an axial flow.

11. The gas turbine engine of claim 5, wherein
the turbulences in the air mass flow are eliminated by a rotation of both compressor groups in opposite directions to each other by approximately the same performance.

12. The gas turbine engine of one of claims 1 to 11 wherein
a reverse mechanism is installed between both compressor groups which inverses the rotational movement of the second compressor group to drive the first compressor group in an opposite direction to the second compressor group which is connected to the turbine by means of a shaft.

13. The gas turbine engine of one of claims 1 to 11, wherein
both compressor groups are connected to two inversely rotating groups or blade wheels of the turbine by means of two concentric shafts which transmit the energy needed by the compressor from the turbine to the compressor.

14. The gas turbine engine of claim 13, wherein
the turbine comprises a first group of one or several blade wheels, an axial converter and a second group of one or several blade wheels installed one after the other in the direction of the gas flow.

15. The gas turbine engine of claim 14, wherein
an axial converter is installed between the first group of the turbine and the second group of the turbine to straighten the helicoidal streaming of the gases coming from the first group of the turbine to serve the second group of the turbine.

16. The gas turbine engine of claim 15, wherein
the diameter of the blade wheels of the first group of the turbine is smaller than the diameter of the second group of the turbine so that the first group of the turbine withdraws less energy from the gas stream thus equaling the withdrawal of energy from the gas stream by the second group of the turbine.

17. The gas turbine engine of claim 16, wherein
a steel tube covers the first group of the turbine comprising the shorter blade wheels followed by the axial converter allowing a bypass for the gas flow coming directly from the combustion chamber.

18. The gas turbine engine of claim 17, wherein

the second group of the turbine comprises slightly bigger blade wheels than the blade wheels of the first group to allow both groups of the turbine to withdraw approximately an equal amount of energy from the gases coming out of the combustion chamber.

19. The gas turbine of claim 18, wherein
a conical steel tube covers the first group of the turbine, the axial converter and the second group of the turbine allowing a bypass for the hot gases coming directly from the combustion chamber and streaming our of the engine for the propulsion of the aircraft.

GAS TURBINE ENGINE 1

FIG. 1

GAS TURBINE ENGINE 2

FIG. 1A

AERO TURBO ENGINE

FIG. 2

FIG. 3

AERO TURBO ENGINE

FIG. 4

EP 2 141 325 A2

AERO TURBO ENGINE

FIG. 4A

EP 2 141 325 A2

FIG. 4B

FIG. 5A

FIG. 5B

FIG. 6

CHART NO. 100

1) TOTAL ENERGY          AC = 13.5 UNITS
   EFFECTIVE ENERGY    AB = 1 UNIT

2) TOTAL ENERGY          AC1 = 13 UNITS
   EFFECTIVE ENERGY    AB1 = 6.5 UNITS (BY 60°)

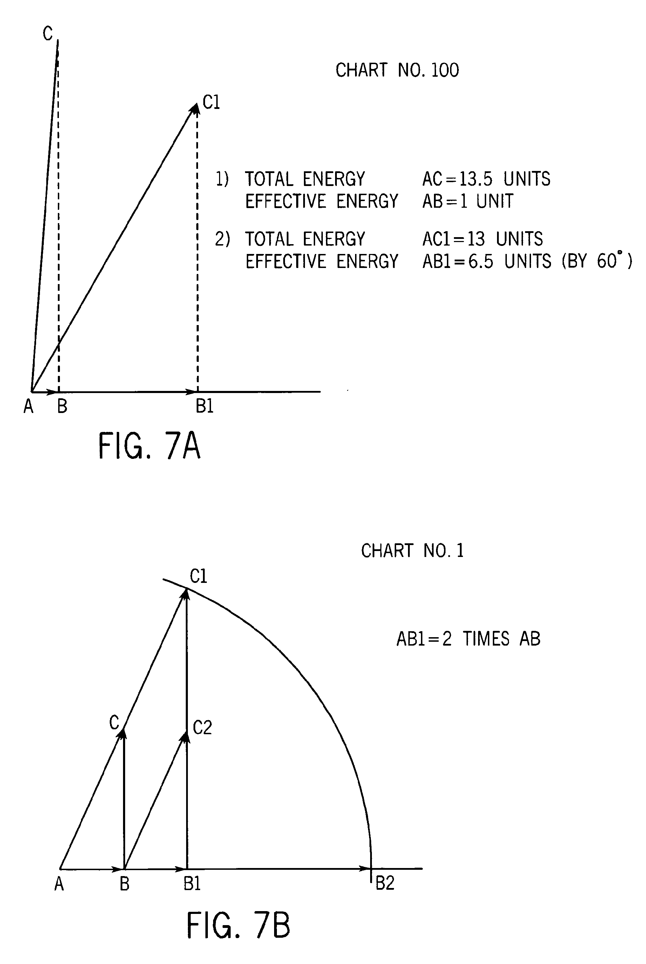

## FIG. 7A

CHART NO. 1

AB1 = 2 TIMES AB

## FIG. 7B

CHART NO. 2

AB1 = 2 TIMES AB
AB2 = 2.4 TIMES AB
AB3 = 2.4 TIMES AB1

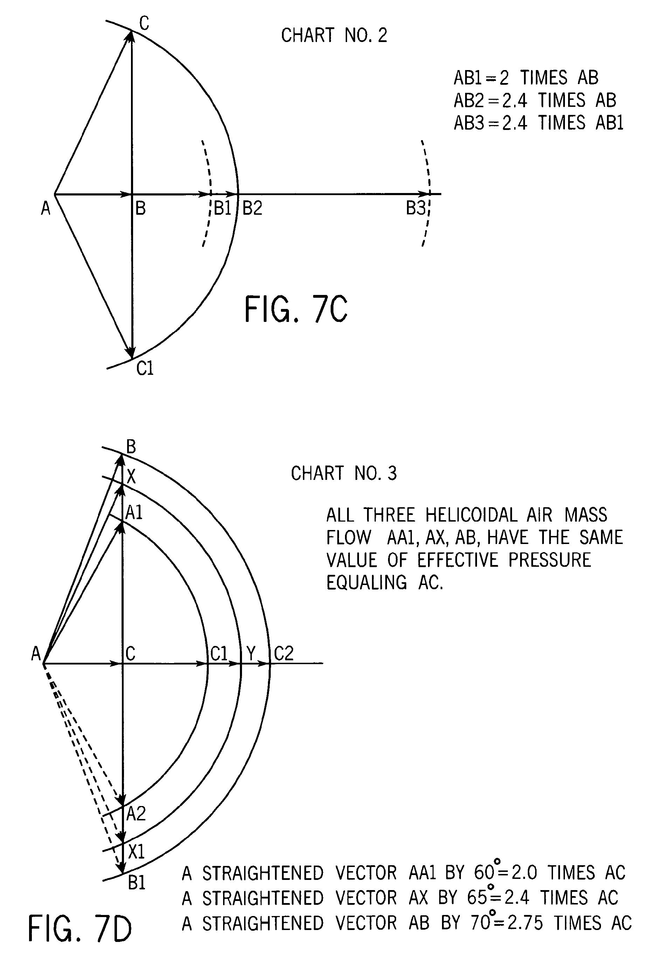

FIG. 7C

CHART NO. 3

ALL THREE HELICOIDAL AIR MASS
FLOW AA1, AX, AB, HAVE THE SAME
VALUE OF EFFECTIVE PRESSURE
EQUALING AC.

A STRAIGHTENED VECTOR AA1 BY 60°= 2.0 TIMES AC
A STRAIGHTENED VECTOR AX BY 65°= 2.4 TIMES AC
A STRAIGHTENED VECTOR AB BY 70°= 2.75 TIMES AC

FIG. 7D

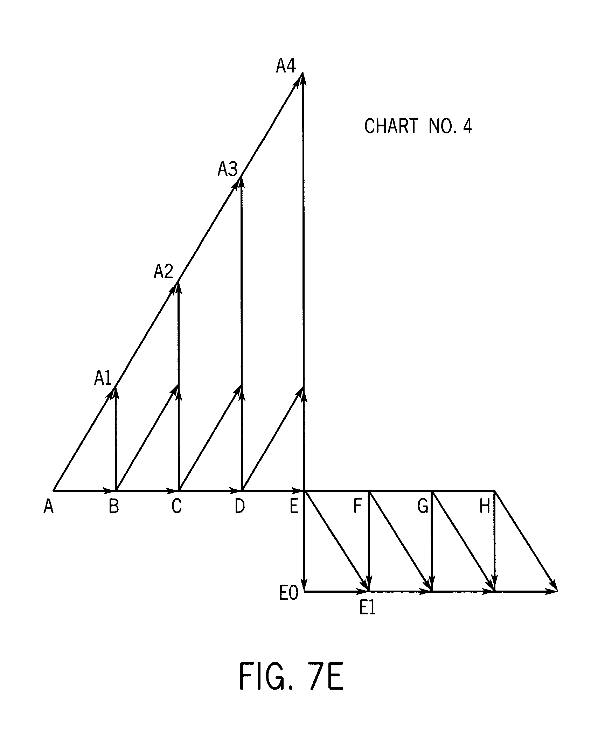

FIG. 7E

CHART NO. 5

FOR A TOTAL OF 9 BLADE WHEELS

- TOTAL PRESSURE OF A
  CONVENTIONAL COMPRESSOR     AF
  (AE + EF)
- TOTAL PRESSURE OF A COMPRESSOR
  ACCORDING TO THE NEW  CONCEPT 2 x A'F
                                = 2.4 x AF

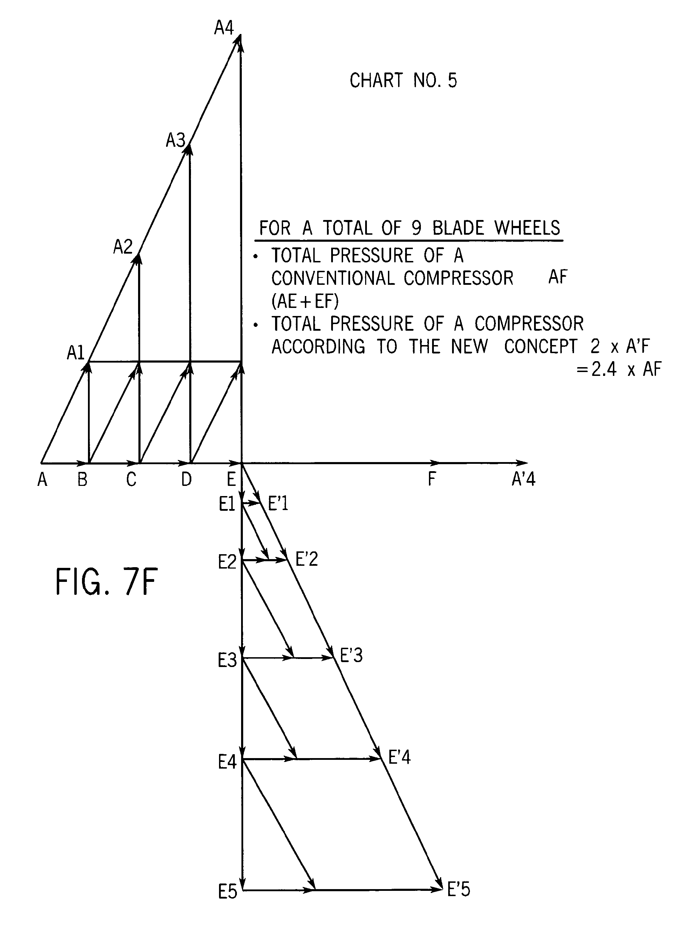

FIG. 7F